# EUROPEAN PATENT APPLICATION

(11) **EP 4 674 814 A1**
(43) Date of publication of application: **07.01.2026**
(21) Application number: 24185680.6
(22) Date of filing: 01.07.2024
(51) Int. Cl.: C01F 11/38, C01B 25/22

(54) **METHOD FOR PRODUCING LOW-EMISSION CALCIUM NITRATE**

(71) Applicant: Yara International ASA, 0277 Oslo (NO)
(72) Inventor: Antlauf, Mathis Erik, 3936 PORSGRUNN (NO); Franke, Wolfram, 3936 PORSGRUNN (NO)
(74) Representative: AWA Sweden AB

(57) **Abstract**

The present disclosure provides a method for producing calcium nitrate from calcium lactate.

The method comprises:
a) providing an aqueous calcium lactate solution;
b) adding phosphoric acid to the aqueous calcium lactate solution, thereby producing a first composition comprising lactic acid and calcium phosphate;
c) separating the calcium phosphate from the first composition, thereby obtaining an aqueous lactic acid solution and a second solid composition comprising calcium phosphate;
d) reacting the second solid composition with nitric acid, thereby obtaining a third composition comprising phosphoric acid and calcium nitrate; and
e) separating the calcium nitrate from the third composition, thereby obtaining an aqueous phosphoric acid solution and a solid calcium nitrate composition.

## Description

### Field of the disclosure

The present disclosure is related to the field of chemistry, in particular the production of calcium nitrate.

### Background information

Calcium nitrate is an inorganic compound with the formula Ca(NO₃)₂. It is used in different applications, such as fertilizer, wastewater treatment, concrete additive, and additive in latex production.

Today, different methods are used to produce this compound on industrial scale, including the digestion of calcium carbonate-containing rocks, such as limestone, with nitric acid. Calcium nitrate is also a by-product in the Odda process for the manufacture of phosphoric acid, in particular for producing fertilizer.

However, these methods can generate a lot of greenhouse gas emissions, in particular the limestone route, so there is a need to provide new methods to produce calcium nitrate that generate less greenhouse gas emissions.

Lactic acid is a small organic molecule with different industrial applications, such as food additive. It is mainly produced today by fermentation of a carbohydrate feedstock using bacteria. To separate the lactic acid from the fermentation broth, the lactic acid is converted to calcium lactate, which is then precipitated. The calcium lactate is then reacted with a strong acid, such as sulfuric acid, to obtain purified lactic acid. A by-product of this process is calcium sulfate, also called gypsum. The low quality of this material allows only very few industrial applications resulting in low value and the gypsum is considered a waste product.

### Summary of the disclosure

It was found that it is possible to produce calcium nitrate from calcium lactate. This method eliminates any production of the low-value waste product, calcium sulfate, and provides a calcium nitrate which has a much lower carbon footprint than calcium nitrate products made by conventional methods.

### Brief description of the figures

The following description of the figure of a specific embodiment of a system according to the present disclosure is only given by way of example and is not intended to limit the present explanation, its application or use. In the figure, identical reference numerals refer to the same or similar parts and features.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a method for producing calcium nitrate, the method comprises:
a) providing an aqueous calcium lactate solution;
b) adding phosphoric acid to the aqueous calcium lactate solution, thereby producing a first composition comprising lactic acid and calcium phosphate;
c) separating the calcium phosphate from the first composition, thereby obtaining an aqueous lactic acid solution and a second solid composition comprising calcium phosphate;
d) reacting the second solid composition with nitric acid, thereby obtaining a third composition comprising phosphoric acid and calcium nitrate; and
e) separating the calcium nitrate from the third composition, thereby obtaining an aqueous phosphoric acid solution and a solid calcium nitrate composition.

The present method allows to recover the calcium comprised in the calcium lactate solution and transform it into a valuable calcium nitrate product. Calcium nitrate, obtained in the present method, is a water-soluble salt that has several industrial applications and has a much higher value than calcium sulfate, obtained in the current state of the art process.

The direct reaction of calcium lactate with nitric acid to produce calcium nitrate and lactic acid was considered. However, it was observed that it is challenging to efficiently separate calcium nitrate from lactic acid.

Phosphoric acid is another strong inorganic acid widely used in industrial processes, such as fertilizer production. It was found that phosphoric acid can react with calcium lactate to form calcium phosphate and lactic acid, and that it was possible to separate the two products, probably at least partially due to the low water-solubility of calcium phosphate. It was also found that the calcium phosphate obtained in this matter was able to react with nitric acid to form calcium nitrate and phosphoric acid.

So, the method starts with an aqueous calcium lactate solution. An aqueous calcium lactate solution is an aqueous solution comprising calcium lactate. In some embodiments, the aqueous calcium lactate solution is obtained by a process comprising fermentation.

In some embodiments, the aqueous calcium lactate solution comprises from 5.0 to 50 weight%, from 5.0 to 40 weight%, from 5.0 to 30 weight%, from 10 to 50 weight%, from 10 to 40 weight%, from 10 to 30 weight%, of calcium lactate.

The aqueous calcium lactate solution may be obtained after separation of the calcium lactate from the fermentation broth and further purification. In some embodiments, an aqueous calcium lactate solution is obtained by further concentrating the aqueous solution to increase the calcium lactate concentration.

In some embodiments, the aqueous calcium lactate solution has a temperature ranging from 50 to 100 °C. It may be an advantage to pre-heat the aqueous calcium lactate solution before adding any reactant. It has been observed that the solubility of calcium lactate increases greatly with the temperature, so working at higher temperatures allows the use of more concentrated calcium lactate solutions, which may reduce the overall cost of the process.

In some embodiments, the aqueous calcium lactate solution comprises from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of calcium lactate.

Phosphoric acid is added to the aqueous calcium lactate solution, thereby producing a first composition comprising lactic acid and calcium phosphate. The phosphoric acid may be added in a concentrated form, for example comprising from 70 to 85 weight%, or as a diluted aqueous solution.

Phosphoric acid may be added to the aqueous calcium lactate solution as a concentrated grade comprising at least 50 weight% of phosphoric acid, or as a diluted aqueous solution, for example as an aqueous solution comprising from 5.0 to 50 weight%, from 10 to 50 weight%, from 20 to 50 weight%, from 30 to 50 weight%, from 5.0 to 40 weight%, from 5.0 to 30 weight%, from 5.0 to 20 weight%, from 10 to 40 weight%, or from 10 to 30 weight% of phosphoric acid.

In some embodiments, phosphoric acid is added in a molar deficiency compared to calcium lactate in the aqueous calcium lactate solution. In some embodiments, phosphoric acid is added equimolar ratio compared to calcium lactate in the aqueous calcium lactate solution. In some embodiments, phosphoric acid is added in molar excess compared to calcium lactate in the aqueous calcium lactate solution.

A molar deficiency in phosphoric acid compared to calcium lactate increases the molar yield from a phosphorus perspective, whereas a molar excess of phosphoric acid lowers that yield. The particular conditions of each plant, such as access to calcium lactate and phosphoric acid streams, and costs of these streams may influence the exact conditions of this step. Once the phosphoric acid is added, the mixture may be stirred for a period of time, which may be at least 5 mins, 10 mins, 30 mins, 1 hour, 2 hours, 3 hours, 4 hours, or 5 hours, and up to 10 hours, 15 hours, or 24 hours.

In some embodiments, the first composition comprises from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of lactic acid.

In some embodiments, the first composition comprises from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of calcium phosphate.

Once the reaction is complete or has reached its equilibrium, the calcium phosphate formed in the reaction may be separated from the first composition, thereby obtaining an aqueous lactic acid solution and a second solid composition comprising calcium phosphate. An aqueous lactic acid solution is an aqueous solution comprising lactic acid.

In some embodiments, separating the calcium phosphate from the first composition comprises filtering the first composition. In some embodiments, the separation of calcium phosphate from the aqueous lactic acid solution is done by filtration. It has been observed that filtration was a suitable technique for separating calcium phosphate from an aqueous solution, in particular an aqueous solution comprising calcium lactate.

It has been observed that filtration can be done at a wide range of temperatures. Calcium phosphate, and in particular the calcium phosphate produced in the present method, has a low solubility in water, and precipitates from or crystallizes out of the aqueous solution at temperatures above 0 °C.

In some embodiments, filtering the first composition is performed with the first composition having a temperature ranging from 50 to 90 °C, from 50 to 80 °C, or from 50 to 70 °C. It was found that a temperature above 50 °C provided higher yields for the separation.

In some embodiments, the aqueous lactic acid solution obtained after separation from the first composition comprises from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of lactic acid.

In some embodiments, the second solid composition comprises at least 50, 60, 70, 80, or 90 weight% of calcium phosphate.

In some embodiments, the second solid composition comprises from 50 to 100 weight%, from 60 to 100 weight%, from 70 to 100 weight%, from 80 to 100 weight%, or from 90 to 100 weight% of calcium phosphate.

The second solid composition comprising calcium phosphate is reacted with nitric acid, thereby obtaining a third composition comprising phosphoric acid and calcium nitrate. Although the second solid composition comprising calcium phosphate has a low water-solubility, it reacts readily with nitric acid containing compositions, such as concentrated nitric acid. The reaction produces phosphoric acid and calcium nitrate. It has been observed that calcium nitrate can be precipitated from or crystallized out of an aqueous solution comprising phosphoric acid, such that a solid composition comprising calcium nitrate can be separated, for example by filtration, from the liquid phase.

In some embodiments, the second solid composition comprises calcium phosphate crystallized as monetite (chemical formula: CaHPO₄) and/or hydroxyapatite (chemical formula: Ca₅(PO₄)₃(OH), also written Ca₁₀(PO₄)₆(OH)₂).

In some embodiments, nitric acid is added in excess molar ratio compared to calcium phosphate in the second solid composition.

In some embodiments, the third composition comprises from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of calcium nitrate, and from 1.0 to 50 weight%, from 1.0 to 40 weight%, from 1.0 to 30 weight%, from 1.0 to 20 weight%, from 5.0 to 50 weight%, from 5.0 to 40 weight%, from 5.0 to 30 weight%, from 5.0 to 20 weight%, from 10 to 50 weight%, or from 10 to 40 weight% of phosphoric acid.

The third composition is processed to separate the calcium nitrate comprised therein, thereby obtaining an aqueous phosphoric acid solution and a solid calcium nitrate composition.

The calcium nitrate composition may contain a low amount, for example less than 5 weight%, less than 4 weight%, less than 3 weight%, less than 2 weight%, or less than 1 weight% of phosphoric acid.

The mother liquor from the separation, also called the aqueous phosphoric acid solution, comprises phosphoric acid, and optionally some un-precipitated calcium nitrate. At least a part of the aqueous phosphoric acid solution may be re-used to produce the first composition, thereby limiting the need for fresh phosphoric acid, and limiting the cost of the overall method.

In some embodiments, the method further comprises purifying the aqueous phosphoric acid solution, for example by further removing calcium nitrate, or by concentrating the aqueous phosphoric solution. Hereby, an aqueous solution with a higher phosphoric acid concentration, and higher purity is obtained.

In some embodiments, the aqueous phosphoric acid solution comprises calcium nitrate. In some embodiments, the solid calcium nitrate composition comprises phosphoric acid. Separating two components dissolved in an aqueous solution, for example by precipitating one of them and filtering the obtained mixture, does not always achieve 100% purity and selectivity. So, the solid composition that comprises calcium nitrate as the main component may also comprise some phosphoric acid, and the aqueous phosphoric acid solution may contain some calcium nitrate that did not precipitate.

In some embodiments, separating the calcium nitrate from the third composition comprises cooling the third composition to a temperature below 10 °C, in particular below 5 °C.. The solubility of calcium nitrate in aqueous solutions, in particular aqueous solutions comprising phosphoric acid, decreases when the temperature of the aqueous solution decreases. So, lowering the temperature of the third composition below 10 °C can help to improve the separation of the calcium nitrate by precipitating it.

In some embodiments, separating the calcium nitrate from the third composition comprises filtering the third composition. One way to separate the calcium nitrate from the aqueous solution is to precipitate the calcium nitrate as a solid composition and filter the obtained mixture. By filtering, an aqueous solution comprising phosphoric acid and depleted of calcium nitrate, also called the aqueous phosphoric acid solution, and a solid composition comprising calcium nitrate, also called the solid calcium nitrate composition, are recovered.

In some embodiments, the aqueous calcium lactate solution is obtained by a process comprising fermentation. Fermentation using bacteria is an efficient way to produce an aqueous composition comprising lactic acid. Some bacteria have been engineered to produce selectively lactic acid.

In some embodiments, at least a part of the aqueous phosphoric acid solution is re-used to produce the first composition. The aqueous phosphoric acid solution may be processed before being re-used to produce the first composition . The aqueous phosphoric acid solution comprises phosphoric acid that can be reacted with a new solution of calcium lactate. This can drastically reduce the amount of phosphoric acid required to produce lactic acid, thereby lowering the cost of the process and the final product. The aqueous phosphoric acid solution may require some processing, for example a purification step and/or a concentration step before being mixed with calcium lactate depending on the exact composition of the aqueous phosphoric acid solution.

In another aspect, the present disclosure provides a solid calcium nitrate composition produced by the method according to the first aspect.

### Example 1

5.0 g of calcium lactate pentahydrate was added to various amounts of boiling water (10, 25, or 100 mL). An amount of phosphoric acid was added to the solution (1.59 g which is equivalent to an equimolar ratio of Ca and P, or 0.96 g which represents a molar ratio Ca/P of 1.67/1), which was then stirred at boiling temperature for up to 5 hours. While stirring, a white precipitate appeared. The still hot mixture (temperature around 50 °C) was then filtered, and an aqueous solution comprising lactic acid, and a solid filtrate comprising calcium phosphate were obtained. The solid filtrate was analyzed by X-ray diffraction and showed a unique signal corresponding to pure monetite (CaHPO₄). The P yield, i.e., amount of calcium phosphate obtained divided by theoretical amount of expected calcium phosphate based on the amount of phosphoric acid added, varied between 50 and 100%.

## Claims

1. A method for producing calcium nitrate, the method comprises:
a) providing an aqueous calcium lactate solution;
b) adding phosphoric acid to the aqueous calcium lactate solution, thereby producing a first composition comprising lactic acid and calcium phosphate;
c) separating the calcium phosphate from the first composition, thereby obtaining an aqueous lactic acid solution and a second solid composition comprising calcium phosphate;
d) reacting the second solid composition with nitric acid, thereby obtaining a third composition comprising phosphoric acid and calcium nitrate; and
e) separating the calcium nitrate from the third composition, thereby obtaining an aqueous phosphoric acid solution and a solid calcium nitrate composition.

2. The method according to claim 1, wherein phosphoric acid is added in molar excess compared to calcium lactate in the aqueous calcium lactate solution.

3. The method according to claim 1 or 2, wherein the aqueous calcium lactate solution has a temperature ranging from 50 to 100 °C.

4. The method according to any one of claims 1 to 3, wherein separating the calcium phosphate from the first composition comprises filtering the first composition.

5. The method according to any one of claims 1 to 4, wherein nitric acid is added in excess molar ratio compared to calcium phosphate in the second solid composition.

6. The method according to any one of claims 1 to 5, wherein separating the calcium nitrate from the third composition comprises cooling the third composition to a temperature below 10 °C, in particular below 5 °C.

7. The method according to any one of claims 1 to 6, wherein separating the calcium nitrate from the third composition comprises filtering the third composition.

8. The method according to any one of claims 1 to 7, wherein the aqueous calcium lactate solution is obtained by a process comprising fermentation.

9. The method according to any one of claims 1 to 8, wherein at least a part of the aqueous phosphoric acid solution is re-used to produce the first composition.

10. The method according to claim 9, wherein the aqueous phosphoric acid solution is processed before being re-used to produce the first composition.

11. The method according to any one of claims 1 to 10, further comprising purifying the aqueous phosphoric acid solution by further removing calcium nitrate.

12. A solid calcium nitrate composition produced by the method according to any one of claims 1 to 11.
